# EUROPÄISCHE PATENTSCHRIFT

(11) **EP 0 659 351 B1**
(45) Veröffentlichungstag und Bekanntmachung des Hinweises auf die Patenterteilung: **24.02.1999**
(21) Anmeldenummer: 94112394.5
(22) Anmeldetag: 09.08.1994
(51) Int. Cl.: A23L 3/36, A23G 9/04, A23G 9/14

(54) **Einrichtung zum Herstellen von Speiseeis, gefrorenen Dessert- und Fruchtmassen, Tortenmassen, Teigmassen, aus mehreren schwer mischbaren fluiden Matrizes, welche aus wenigstens einer Stoffkomponente bestehen**
Apparatus for the preparation of ice cream, frozen dessert and fruit masses, cake masses, dough masses, from several difficultly miscible fluid matrices, that consist of at least one component
Appareil pour la préparation des crèmes à la glace, des masses de desserts et de fruits congelées, des masses de tartes et de pâtes, de plusieurs matrices fluides difficiles à mélanger, qui consistent d'au moins un component

(30) Priorität: 24.12.1993 DE 4344393
(43) Veröffentlichungstag der Anmeldung: 28.06.1995
(73) Patentinhaber: FTD FOAM TECHNOLOGY DEVELOPMENT GmbH, D-40822 Mettmann (DE)
(72) Erfinder: Windhab, Erich, Prof. Dr.-Ing., CH-8706 Meilen (CH)
(74) Vertreter: Beyer, Rudi

(56) Entgegenhaltungen:
- EP-A- 0 225 081
- EP-A- 0 478 118
- WO-A-88/07331
- WO-A-92/02146
- BE-A- 559 605
- DE-B- 1 767 046
- DE-B- 2 602 454
- DE-C- 289 262
- DE-C- 4 202 231
- FR-A- 1 507 738
- FR-A- 2 342 472
- FR-A- 2 375 901

## Beschreibung

Die Erfindung betrifft eine Einrichtung zum Herstellen von Speiseeis, gefrorenen Dessert- und Fruchtmassen, Tortenmassen, Teigmassen, aus mehreren schwer mischbaren Matrizes, welche aus wenigstens einer Stoffkomponente bestehen.

Bei der Herstellung von Lebensmitteln aus verschiedenen Komponenten erfordert das homogene und entmischungsstabile Vermischen oftmals einen erheblichen produktionsspezifischen und apparativen Aufwand. Dies gilt insbesondere für die Herstellung von Speiseeis, ebenso wie für die Herstellung von Tortenmassen, gefrorenen Dessert- und Fruchtmassen, Sahne und Teigmassen. Bei der Herstellung von Speiseeis gehen die Investitionen für den apparativen Aufwand für die Installation von Mischanlagen, Homogenisierungsvorrichtung, Lagertanks (Reifetanks) und Freezern (kontinuierliche Gefrier-Aufschlag-Vorrichtungen) oftmals in die Millionen.

Aus der DE-C-42 02 231 ist eine Einrichtung zum Kühlen von eßbaren Schäumen, insbesondere Milchprodukten wie Eiskrem oder Schlagsahne, also von Lebensmitteln, vorbekannt, die den Schaum nach Herstellung auf Lagertemperatur tiefkühlt und worin Aufschlag-, Kühl- und Extrudiereinrichtungen durch Rohrleitungen untereinander verbunden sind. Hierzu wird in der vorerwähnten Druckschrift eine Einrichtung zum Kühlen von eßbaren Schäumen vorgeschlagen, bei der einer Aufschlagvorrichtung unmittelbar ein Kühl- und Gefriergerät zum Vorgefrieren des Schaumes, und dem Kühl- und Gefriergerät unmittelbar eine als kombinierte Tiefgefrier- und Transportvorrichtung ausgebildete motorisch antreibbare Extrudervorrichtung nachgeschaltet ist, in der der vorgefrorene Schaum auf Lagertemperatur herunterkühlbar ist und die Aufschlagvorrichtung, das Kühl- oder Gefriergerät und die Extrudervorrichtung durch Rohrleitungen miteinander verbunden sind, wobei die Extrudervorrichtung mindestens ein Doppelschneckensystem mit zwei mit ihren Drehachsen parallel zueinander angeordneten Schnecken aufweist, und die Schnecken des Doppelschneckensystems mit ihren Schneckenstegen (Wendel) an der inneren Zylindermantelfläche des sie umgebenden Gehäuses schaben, wobei die Stege der zweiten Schnecke mittig zwischen den Stegen der ersten Schnecke angeordnet sind und ein erhöhter Drehachsenabstand der Schnecken realisiert ist, so daß die der Zylindermantelfläche der jeweiligen Schnecke zugekehrte Stirnseite des Schneckensteges der anderen Schnecke einen radialen Abstand von dieser aufweist, und wobei die Schneckenstege mit der Zylindermantelfläche der Schnecken und der inneren Zylindermantelfläche des Gehäuses einen extrem flachen Schneckenkanal begrenzen. Die Einrichtung weist eine Steuerung auf, welche die Drehzahl der Schnecken rezepturspezifisch unter Berücksichtigung der temperaturabhängigen kritischen Schubspannungen für die Strukturveränderungen zur optimierten Abstimmung von mechanischem Energieeintrag, homogener Strukturbeanspruchung des jeweiligen Produktes, überkritischer Scherung, Kühlgradient und Gefrierprozeß durch Erfassung der Produktkonsistenz als Zielgröße vornimmt, wobei die Produktkonsistenz mittels einer on-line-Viskositätsmessung bestimmt wird, derart, daß im Stoffsystem dissipierte, das heißt in Wärmeenergie umgewandelte mechanische Energie ein kritisches Maß nicht überschreitet. Durch diese vorbekannte Einrichtung soll ein lagerfertiges Tiefgefrieren von Eiskrem oder anderen Fluiden auf Temperaturen von weniger als -10° C unter gleichzeitiger Erzeugung eines kremigen Zustandes möglich sein, bei weitestgehend homogenen mechanischen Energieeintrag aufgrund der Verwendung eines speziellen Doppelschneckensystems.

Aus der FR-A-1 507 738 ist ein Verfahren zum Herstellen von Gefrierprodukten in körniger Form auf der Basis von Flüssigkeitstropfen vorbekannt, bei dem die zu gefrierende Flüssigkeit in einen kalten Gasstrom zerstäubt wird. Dabei erstarren die Flüssigkeitstropfen durch Absorption der Wärme, ohne daß sie mit einer festen Oberfläche in Berührung kommen. Dann wird anschließend das pulverförmige Gefrierprodukt vom Gasstrom getrennt. Der Gasstrom ist hohem Druck ausgesetzt. Das pulverförmige Gefrierprodukt wird unterkühlt, bevor es vom Gasstrom getrennt wird. Die zerstäubte Flüssigkeit wird dabei durch einen Gasstrom gefroren, der im Prinzip von unten nach oben durch eine Gefrierkammer strömt, indem die Geschwindigkeit des Gasstromes während der Dauer des Gefrierens herabgesetzt wird, und erhöht wird, während die Mischung die Gefrierkammer verläßt und sich trennt. Eine Anlage zum Durchführen dieses Verfahrens besteht aus einer Gefrierkammer, die mindestens eine Zerstäubervorrichtung für die zu gefrierende Flüssigkeit, mindestens einen Separator für die Mischung des gefrorenen Produktes in Pulver und Gas und mindestens eine Vorrichtung zum Entnehmen des gefrorenen Produktes aus der Anlage, sowie eine Vorrichtung enthält, die den Gasstrom heranführt und mindestens eine Vorrichtung zum Kühlen des Gasstromes, bevor er die Gefrierkammer erreicht. Es ist außerdem ein Umlaufgebläse vorgesehen, das den Gasstrom zirkulieren läßt. Neben einer Düse zum Zerstäuben der zu gefrierenden Flüssigkeit ist außerdem eine Zerstäubervorrichtung für zusätzliches Gas vorgesehen, die das Gas unter hohem Druck in die Anlage einleitet. Dieses zusätzliche Gas unter hohem Druck gelangt als Überschuß durch die Zerstäubervorrichtung in die Anlage und treibt ein Umlaufgebläse an. Dann gelangt es in einen Wärmetauscher, der im Umlauf des Gasstromes zwischen dem Gebläse und der Kältekammer in Gegenrichtung des Gasstromes angeordnet ist und erwärmt sich dort beim Abkühlen des Gasstromes auf etwa die Umgebungstemperatur.

Mit diesem Verfahren soll die Herstellung eines pulverförmigen gefrorenen Produktes, das heißt in Form von sehr feinen Körnern, möglich sein, die auf der Basis von Flüssigkeitstropfen erhalten werden, insbesondere von wäßrigen Lösungen wie zum Beispiel Fruchtsaft, Milch oder Kaffee und ähnliche Produkte.

Die FR-A-2 342 472 betrifft ebenfalls ein Verfahren zum Gefrieren von flüssigen Produkten, wobei das flüssige Produkt in einer ausreichend kalten Umgebung zerstäubt wird, um ein praktisch sofortiges Gefrieren der zerstäubten Produkte zu erreichen. Das gefrorene Produkt wird in Form eines Pulvers aufgefangen, dessen Granulometrie von der Größe der zerstäubten Partikel abhängt. Später wird dieses Pulver einer mechanischen Bearbeitung unterzogen, wenn die Granulometrie verfeinert werden muß. Normalerweise sollen Produkte so gefroren werden, die im Normalzustand in einer mehr oder weniger viskosen, sogar breiartigen flüssigen Form vorliegen.

Angewendet werden soll dieses Verfahren beim Gefrieren von Milch, Eiern, Brei und Fruchtsaft.

Die BE-A-559 605 bezieht sich auf ein Verfahren zur Konservierung von flüssigen Nahrungsmitteln, insbesondere auf ein Verfahren zum Gefrieren von Vollmilch, Fruchtsäften, Bier und ähnlichen Flüssigkeiten, die nach ihrem Auftauen ihren ursprünglichen Zustand wieder zurückerhalten sollen. Hierzu wird die Flüssigkeit in winzige, im Abstand zueinander befindliche Partikel in einer gekühlten Kammer zerstäubt, um das schnelle Gefrieren dieser Partikel zu bewirken, während sie sich im Abstand zueinander befinden. Das gefrorene Produkt wird anschließend verpackt. Zum Durchführen dieses Verfahrens wird eine abgekühlte Kammer verwendet, die unterhalb des Gefrierpunktes der betreffenden Flüssigkeit gekühlt wird. Bei der Durchführung dieses Verfahrens zum Konservieren einer Flüssigkeit wird die betreffende Flüssigkeit in Partikel von rund ½ Mikron bis 500 Mikron, in einer gekühlten Kammer eingesprüht, um das schnelle Gefrieren der Partikel zu bewirken. Es wird auch vorgeschlagen, die zu konservierende Flüssigkeit unter Unterdruck zu setzen, sie anschließend in winzige Partikel von ½ Mikron bis 500 Mikron in einer gekühlten Kammer zu zerstäuben, um das erwähnte schnelle Gefrieren der Partikel zu bewirken. Hierdurch wird ein gekühltes, nicht oxydierendes Gas in der Kammer in Zirkulation gehalten. Wird Milch auf diese Weise konserviert, so wird sie ebenfalls in Partikel von ½ Mikron bis 500 Mikron in eine unterkühlte Kammer eingesprüht, deren Temperatur -23,3° C bis -40° C aufweist, um das schnelle Gefrieren der Milchpartikel zu bewirken. Auch die Milch kann hierbei einem Unterdruck ausgesetzt werden. Das tiefgefrorene Pulver kann dadurch verpackt werden, daß es in Blocks zusammengepreßt wird, um den Gasanteil im Block zu eliminieren. Auch Bier soll auf diese Art und Weise haltbar gemacht und transportiert werden.

Alles in allem verspricht man sich durch dieses Verfahren anscheinend eine bessere Möglichkeit, um Vollmilch an einem beliebigen Ort durch Molkereien herzustellen und zu konservieren und sie auch über lange Strecken transportieren zu können, und zwar zu günstigen Preisen.

Die WO-A-92/02146 betrifft eine gekühlte Mischkammer, durch die verschiedene Bestandteile für Eiskrem hindurchgebracht werden. Hierbei wird kein Pulver, sondern eine hochkonsistente Masse erzeugt. Auf das Einhalten eines Mischverhältnisses kommt es nicht an. Zum Beispiel kann Schokoladenstreusel einfach in rieselfähigem Zustand oben aufgeschüttet werden. Befüllt werden Eisbecher, wie sie normalerweise zum Verzehr bereitstehen.

Die FR-A-2 375 901 betrifft eine Anlage zum Gefriertrocknen mit einer Kühlkolonne, Vorrichtungen zum Heranführen von Kühlmitteln und flüssigen Produktströmen und einer Auslaßöffnung für die gefrorenen körnigen Bestandteile am unteren Teil der Kühlkolonne sowie Abzweigleitungen für ein gasförmiges Kühlmittel. Das gekühlte, körnige Produkt wird über ein Förderband mit einer fortlaufenden Anlage zum Gefriertrocknen verbunden. Die Produktlösung wird dabei in einen fließenden Strom von flüssigem, leicht flüchtigen Kühlmittel geleitet. Die Größe und der Feststoffgehalt der gefrorenen Körnchen wird mit Hilfe von Änderungen der Konzentration, der Viskosität und des Einspritzdruckes der Produktlösungen sowie durch Änderung des Düsendurchmessers variiert. Als Kühlmittel wird flüssiger Stickstoff verwendet. Durch diese Anlage soll es möglich sein, im Dauerverfahren gleichförmig gefrorene Körnchen für die Lyophilisierung bereitzustellen, das einen schnellen Produktwechsel ermöglicht, ohne daß eine große Anlage erforderlich sei. Mit einer solchen Anlage sei das schlagartige Gefrieren der Produktlösung mit Bildung von kleinen sphärischen Partikeln möglich. Diese Kugeln sollen sich von dem gasförmigen Kühlmittel leicht trennen lassen und können gefriergetrocknet und verarbeitet werden. Die auf diese Weise erhaltenen gefriergetrockneten Körnchen sollen sehr gleichmäßig und sehr löslich sein und aufgrund ihrer sphärischen Form die spätere Verarbeitung unter den besten Voraussetzungen bieten.

Die DE-C-289 262 beschreibt ein Verfahren zum Herstellen von Margarine, insbesondere Pflanzenmargarine, wobei die Margarineemulsion mittels Streudüsen in Nebelform innerhalb eines Raumes zerstäubt wird, in dem sich kalte Luft oder sonstige indifferente kalte Gase befinden, worauf in üblicher Weise die gekühlte Masse weiterbearbeitet wird. Dabei soll die Margarineemulsion in durch Düsen nebelförmig zerstäubtem Zustand durch kalte Luft oder kalte Gase, welche zweckmäßig im gleichmäßigen Kreislauf auf die zerstäubte Emulsion einwirken, nur vorgekühlt werden und die so vorgekühlte, feinpulverige, lockere Masse durch andere Kühlmittel, insbesondere durch Stehenlassen in Kühlräumen, fertig gekühlt werden.

Mischungen, die sich nicht entmischen dürfen, werden nicht beschrieben.

Die EP-A-0 478 118 beschreibt eine Vorrichtung zum Herstellen von friergetrockneten Partikeln. Hierbei handelt es sich um einen reinen Gefrier- bzw. Gefriertrockenvorgang. Die Herstellung von Mischungen und deren Problematik ist nicht erörtert. Vielmehr wird reines Pulver oder ein Granulat erzeugt.

Aus der DE-B-26 02 454 ist eine Vorrichtung zum Behandeln pulveriger oder körniger Stoffe mit einer Flüssigkeit vorbekannt, bestehend aus einem Behälter mit einem Stoffeinlaß in seinem oberen Teil mit einem Raum für das freie Abwärtssinken des behandelten Stoffes unterhalb des Stoffeinlasses, mit in diesem Raum gerichteten Sprühdüsen für die Flüssigkeit und mit Einrichtungen zum Erzeugen eines aufsteigenden Gasstromes, die einen im unteren Teil des Behälters gelegenen Gaseinlaß und einen höher gelegenen Gasauslaß umfassen. Der Raum für das Abwärtssinken des Stoffes ist von einer Wand eingeschlossen, an deren unteren Ende ein Gasauslaß-Ringspalt als Zugang zu einem Ringraum für den Abzug der in den Behälter eingeführten Gasströme vorgesehen ist. Hierdurch soll ein gleichmäßiges Benetzen des Stoffes mit Flüssigkeit gewährleistet sein, um zu besseren Eigenschaften des behandelten Stoffes zu kommen. Dabei können feinste Teile durch Aneinanderkleben zu einem porösen Agglomerat sich aufbauen. Hierdurch soll der so behandelte Stoff weniger leicht zusammenbacken, gut rieselfähig bleiben und sich leicht in Flüssigkeit auflösen bzw. dispergieren lassen. Vorgeschlagen wird, auf diese Weise leicht lösliche Stoffe, zum Beispiel Zucker-Kakao-Getränke, Milchpulver, Kleinkindernahrung, Waschmittel, Farben, Stärke und Vitaminpräparate herzustellen. Die Herstellung von Mischungen, insbesondere von Speiseeismischungen ist nicht vorgesehen.

Die DE-B-17 67 046 beschreibt eine Vorrichtung zum Besprühen von pulverförmigen Stoffen oder Granulaten mit Flüssigkeiten, bestehend aus einem Turm mit einer im Turmumfang vorgesehenen Reihe von Öffnungen und davon im Abstand angeordnete Sprühdüsen, mit einer pneumatischen Feststoffzuführung im Oberteil des Turmes, mit einer Auslauföffnung für die fertig besprühten Stoffe im unteren konusförmigen ausgebildeten Turmauslauf, mit einer im Turmoberteil angeschlossenen Sammelleitung und einer Umlaufleitung sowie einer Kühl- und einer

Filtereinrichtung für den Gasstrom. Die Umlaufleitung ist nach dem Filter in mehrere Zweigleitungen derart aufgeteilt, daß die Zweigleitung andererseits mit dem Turmauslauf, andererseits mit der pneumatischen Feststoffzufuhr und außerdem in eine der Sprühdüsenzahl entsprechenden Anzahl von Teilleitungen aufgeteilt ist, die mit den im Turmmantel vorgesehenen Öffnungen für die Sprühdüsen korrespondieren. Außerdem sind die Zweigleitungen über die Nachbehandlungseinrichtung mit dem Turmauslauf verbunden. Hier soll vorhandenes Pulver besprüht werden, zum Beispiel um Milchaustauschfutter für die Kälbermast herzustellen.

Aus der EP-A-0 225 081 ist ein Verfahren vorbekannt, bei welchem eine Mixtur aus Flüssigkeit und Gas gegen einen Körper versprüht wird, der aus einer Kühlflüssigkeit besteht. Die Oberfläche der Flüssigkeit wird aufgewühlt oder umgerührt durch die Einführung von Gas. Dabei erfolgt ein Energieaustausch mit der Kühlflüssigkeit, um gefrorene Partikel herzustellen, die nicht zusammenkleben sollen. Die gefrorenen Partikel sollen durch einen Schraubenförderer aus dem Gefrierbad herausgefördert werden.

Der Erfindung liegt die Aufgabe zugrunde, eine Einrichtung zu schaffen, mittels welcher sich industriell mit relativ geringem Aufwand Speiseeis, gefrorene Dessert- und Fruchtmassen, Tortenmassen, Teigmassen, aus mehreren schwer mischbaren fluiden Matrizes, welche aus wenigstens einer Stoffkomponente bestehen, problemlos herstellen lassen.

Die Aufgabe wird durch die in **Patentanspruch 1** wiedergegebenen Merkmale gelöst.

Dem Gefriersprühturm werden die zu versprühenden fluiden Matrizes über eine oder mehrere Pumpen zugeführt und über im Kopfraum des Gefriersprühturms angeordnete, zum Beispiel als Ein- oder Mehrstoff-, insbesondere Zweistoff-Sprühdüsen, homogen versprüht. Über den Umfang des Sprühturms können in mehreren übereinanderliegenden horizontalen Ebenen mehrere Kältemittel-, Umluft- und/oder Produktdüsen in einem Winkel von zum Beispiel ≤ 60° zur Tangentialebene, im Extremfall tangential (nur bei Kältemittel und Druckluft), angeordnet sein, so daß beim Eindüsen von Kältemitteln bzw. Druckluft eine Rotationsströmung oder bei parallel zur Turmlängsachse ausgerichteten Düsen eine auf- oder abwärts orientierte wandnahe Axialströmung hoher Wandgeschwindigkeit erzeugt wird. Diese bewirkt ein Freihalten der Sprühturminnenwand von 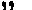 Anhaftungen" durch nicht bzw. nur teilgefrorene Sprühtröpfchen.

Die Höhe des Sprühturms ist eine Funktion des Materialverhaltens (Viskosität, Sprühtröpfchengrößenverteilung, Wärmeleit- und -übergangskoeffizienten) sowie abhängig von der Düsenauslegung und deren Betriebsweise, wobei der Differenzdruck einen Haupteinfluß auf die Tröpfchengrößenverteilung ausübt.

Die nach einer spezifischen 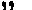 Fallzeit" im Gefriersprühturm zu festen Pulverpartikeln bzw. Flocken gefrorenen Matrizes sammeln sich im Bodenraum des Sprühturms. Von dort kann es mittels einer zum Beispiel als Zellenradschleuse oder einer alternativen Austragsvorrichtung, zum Beispiel Schnecke, Vibrationsboden oder dergleichen, einer Kompaktierungseinheit zugeführt werden.

Im Gefriersprühturm werden zur definierten Erzeugung der Strömung bei konstanter Gastemperatur N2 (Gas oder gesprühtes Fluid) sowie Druckluft eingedüst. Zur optimierten Nutzung der eingesetzten 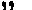 Kälteenergie" kann der Sprühturm ferner mit einer Umluftvorrichtung ausgestattet sein. Nach dem 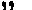 Kaltfahren" des Gefriersprühturmes wird die turminterne Strömung im Umluftbetrieb aufrechterhalten. Die Absaugung der Umluft kann in der unteren Turmhälfte über einen Doppelmantelspalt erfolgen. Über einen Kompressor oder Ventilator kann eine Rückführung in den Gefriersprühturm mittels der Kältemitteldüsen oder separater Düsenöffnungen erfolgen, welche bevorzugt in gleicher Weise wie die Kältemitteldüsen angeordnet sein können.

Durch die beschriebene Form der Gasabsaugung wird die Abscheidung der gefrorenen Tropfen nur minimal beeinflußt. Der Gefriersprühturm wird vorteilhafterweise komplett wärmeisoliert.

Am Beispiel eines Speiseeismixes wurde das Prinzip einer erfindungsgemäßen Einrichtung erfolgreich getestet.

Sprühversuche mit unterschiedlichen Speiseeisrezepturen wurden vorgenommen. Rasterelektronenmikroskopische Aufnahmen der resultierenden gefrorenen Pulverstrukturen wurden hergestellt. Es war deutlich zu erkennen, daß die sprühgefrorenen Tropfen die disperse Phase in einer kontinuierlichen Gasphase darstellen, das heißt gegenüber einer herkömmlichen Speiseeisstruktur z. B. eine 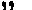 Phasenumkehrung" besteht. Die resultierende Tropfengrößenverteilung der gefrorenen Tröpfchen kann zwischen 5 bis 30 µm liegen.

Die sensorische Qualität der gefrorenen Pulvermatrix nach definierter zu einer schaumartigen Produktstruktur führenden Kompaktierung - batchweise manuell sowie in einem Gefrierextruder - war für derart neuartig erzeugte Speiseeisprodukte im Vergleich mit konventionellen Produkten als gut zu bewerten.

Im sensorischen Eindruck zeigt sich auch im Falle der Phasenumkehr bei vergleichbaren Eismatrix-/Gas-Anteilen kein signifikanter Unterschied, sofern die Feindispersität (Tropfendurchmesser < 200 bis 300 µm) gewährleistet ist.

Die **Patentansprüche 2** und **3** beschreiben weitere vorteilhafte erfinderische Ausgestaltungen.

In der Zeichnung ist die Erfindung - teils schematisch - beispielsweise veranschaulicht. Es zeigen:
- Fig. 1: eine erfindungsgemäße Einrichtung in schematischer Seitenansicht, teils im Schnitt dargestellt;
- Fig. 2: einen Schnitt nach der Linie II - II der Fig. 1;
- Fig. 3: einen Schnitt nach der Linie III - III der Fig. 4;
- Fig. 4: eine Draufsicht auf zwei Extruderschnecken und
- Fig. 5: einen Gefriersprühturm in schematischer Darstellung mit angedeuteten Schnittebenen und möglichen Düsenanordnungen.

Mit dem Bezugszeichen 1 ist eine Leitung bezeichnet, in der eine Pumpe 2 eingeschaltet ist, durch welche eine fluide Matrix einem Sprühkopf 3 zuförderbar ist. Dem Sprühkopf 3 ist mindestens eine Spühdüse 4 zugeordnet, die auch als Mehrstoffsprühdüse, zum Beispiel als Zweistoffsprühdüse, ausgebildet sein kann.

Statt einer Leitung 1 können auch mehrere Leitungen mit einer entsprechenden Anzahl von Pumpen (nicht dargestellt) vorgesehen sein, durch die jeweils eine fluide Matrix oder mehrere jeweils aus einer oder mehreren Komponenten bestehende Matrizes getrennten Sprühköpfen und/oder Sprühdüsen zuführbar sind.

Die fluide Matrix kann aus einer oder mehreren Komponenten bestehen, die in einem vorgeschalteten Kreislauf, zum Beispiel Leitungen und/oder Behältern, herstellbar ist.

Es ist auch möglich, unterschiedliche Matrizes nacheinander über die Rohrleitung 1 oder über verschiedene Rohrleitungen heranzufördern und diese in der nachfolgend noch zu beschreibenden Art und Weise durch die Sprühdüsen 4 zu versprühen.

Der Sprühkopf 3 ist an der Oberseite eines Gefriersprühturmes 5 angeordnet, wobei sich die Sprühdüsen in hängender Anordnung in dem Innenraum des Gefriersprühturmes 5 befinden.

Der Gefriersprühturm 5 ist allseitig geschlossen ausgebildet und besitzt lediglich an seiner Unterseite eine durch bei der dargestellten Ausführungsform über eine Zellenradschleuse 6 verschließbare Auslaßöffnung 7.

Des weiteren ist der Gefriersprühturm 5 allseitig durch einen Isolationsmantel 8 aus geeignetem Material wärmeisoliert.

Der Gefriersprühturm 5 besitzt bei der dargestellten Ausführungsform über mehr als zwei Drittel seiner Länge eine zylindrische Ausgestaltung und ist stehend angeordnet, so daß die durch Sprühdüsen 4 zu feinen Tröpfchen versprühten Matrizes nach unten fallen können.

An den zylindrischen Querschnitt schließt sich an seinem unteren Ende ein kegelstumpfförmiges Bodenstück 9 an, das sich in Richtung auf die Auslaßöffnung 7 verjüngt.

Im Höhenabstand unterhalb der Sprühdüse 4 sind über den Umfang des Gefriersprühturmes 5 in unterschiedlichen Höhenbereichen mehrere Düsen 10, 11, 12 bzw. 13, 14, 15 angeordnet. Statt in - wie dargestellt - drei horizontalen Ebenen, können derartige Sprühdüsen 10 bis 15 auch in weniger oder noch mehreren solcher Ebenen vorgesehen sein. Es ist auch nicht zwingend erforderlich, daß z. B. die Sprühdüsen 10 und 13 jeweils koachsial zueinander angeordnet sind. Vielmehr können die Sprühdüsen 10 bis 15 versetzt, zum Beispiel auf einer Schraubenlinie über den inneren Umfang des Gefriersprühturmes 5 verteilt, angeordnet sein. Des weiteren ist die Anzahl der Düsen 10 bis 15 wie sie aus der Zeichnung zu erkennen ist nicht bindend für alle im Rahmen des Erfindungsgedankens liegende Ausführungsformen. Die Anzahl dieser Düsen 10 bis 15 kann erheblich größer, oder aber auch kleiner sein als dies beschrieben und dargestellt ist.

Die Sprührichtung der Düsen 10 bis 15 kann bevorzugt in einem Winkel gleich oder kleiner 90° zur Tangentialebene angeordnet sein. In Extremfällen lassen sich die Sprührichtungen tangential (0°) oder normal (90°) anordnen.

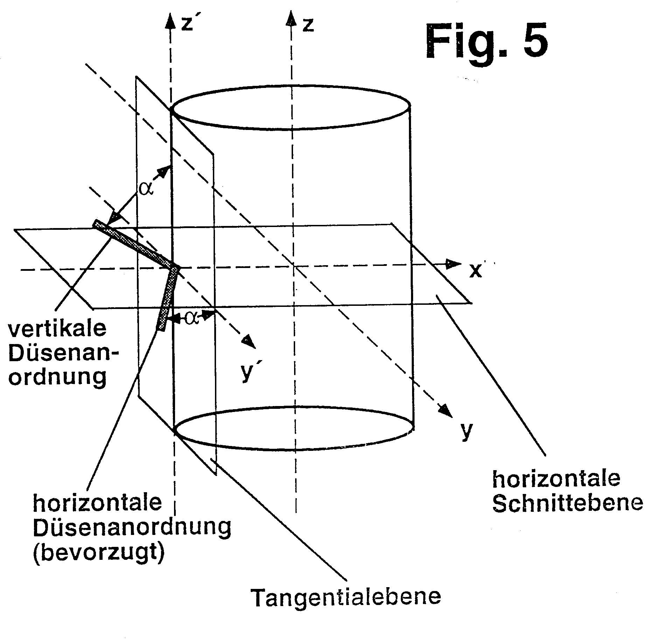

Des weiteren ist eine vertikale Düsenanordnung oder auch bevorzugt eine horizontale Düsenanordnung möglich (Fig. 5).

Den Düsen 10 bis 15 wird über durch Ventile absperrbare Leitungen ein geeignetes Kältemittel, zum Beispiel N2, Gas oder Fluid, zugeführt. Die Leitungen 16 und 17 sind über eine Sammelleitung 18 an eine Verteilerleitung 19 angeschlossen, die ihrerseits Anschlußstutzen 20, 21 und 22 aufweist, die zu den einzelnen Düsenköpfen der Sprühdüsen 10 bis 15 führt. Die Verteilerleitung 19 kann als Sammelringleitung ausgeführt sein, an die sämtliche dem Gefriersprühturm zugeordnete Kältemitteldüsen 10 bis 15 angeschlossen sind.

Dadurch, daß die Sprührichtung der Sprühdüsen 10 bis 15 zum Beispiel unter einem Winkel kleiner 90° zur Tangentialebene angeordnet ist, ergibt sich beim Einsprühen von Kältemittel, zum Beispiel N2, Gas, Fluid oder Druckluft, eine Rotationsströmung oder bei parallel zur Turmlängsachse ausgerichteten Düsen eine auf- oder abwärtsorientierte, wandnahe Achsialströmung hoher Wandgeschwindigkeit, die ein Freihalten der Sprühturminnenwand von Anhaftungen durch nicht bzw. nur teilgefrorene Sprühtropfen der durch die Sprühdüse 4 abgesprühten Matrix gewährleistet

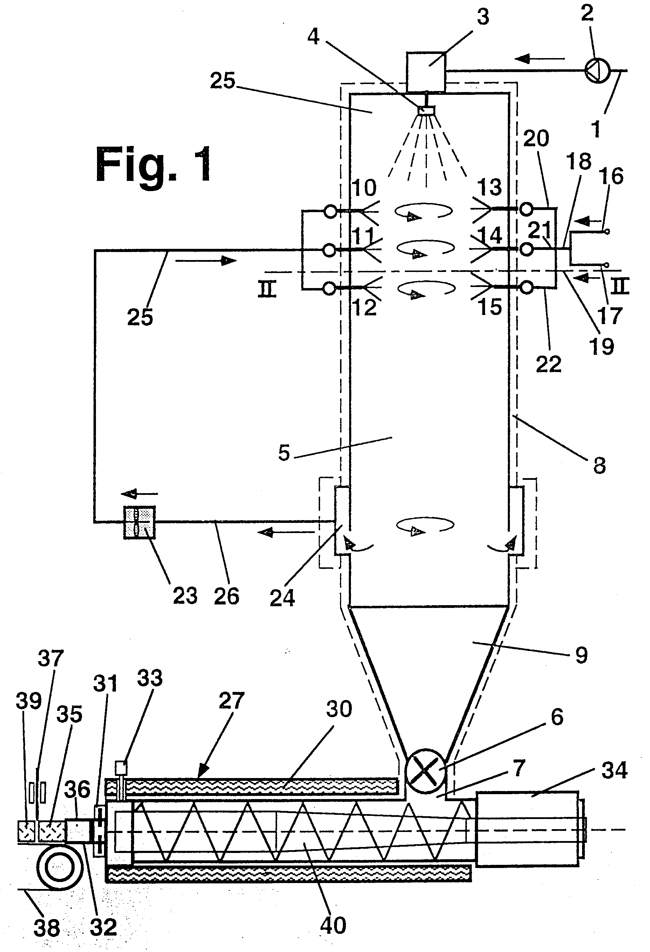

Zur optimierten Nutzung der eingesetzten Kälteenergie ist der Gefriersprühturm 5 ferner mit einer Umluftvorrichtung 23 versehen. Nach dem Kaltfahren des Gefriersprühturmes 5 wird die turminterne Strömung im Umluftbetrieb aufrechterhalten. Die Absaugung der Umluft erfolgt in der unteren Hälfte des Gefriersprühturmes 5 über einen Doppelmantelspaltring 24, was durch die Pfeile in Fig. 1 angedeutet ist. Hierzu ist der Umluftvorrichtung 23 eine Leitung 25 zugeordnet, die an den Doppelmantelspaltring 24 angeschlossen ist und durch die die Absaugung der Umluft erfolgt. Diese wird durch eine Druckleitung 26 in die Ringsammelleitung 19 wieder eingespeist und von dort aus über die Düsen 10 bis 15 in den Gefriersprühturm 5, gegebenenfalls zusammen mit dem Kältemittel, oder aber im Bedarfsfalle statt dessen über zusätzliche Düsen dem Gefriersprühturm 5 zugeführt. Zusätzliche Düsen (nicht dargestellt) können in der gleichen Weise ausgebildet und angeordnet sein wie die Sprühdüsen 10 bis 15. Durch die beschriebene Form der Gasabsaugung mittels der Umluftvorrichtung 23 wird die Abscheidung der gefrorenen Tropfen der Matrizes nur minimal beeinflußt.

Die durch die Sprühdüse 4 abgesprühte Matrix wird zu feinen Tröpfchen verteilt, die auf ihrem Weg durch den Gefriersprühturm 5 gefrieren und die sich als Pulver oder Schnee im Bereich der Auslaßöffnung 7 sammeln. Von hier aus wird das feindisperse Pulver mittels der Zellenradschleuse 6 einer geeigneten Fördervorrichtung zugeführt, die bei der dargestellten Ausführungsform aus einer Extrudervorrichtung 27 besteht, die zwei Extruderschnecken 28 bzw. 29 aufweist. Die Extrudervorrichtung 27 wird bei der dargestellten Ausführungsform mittels direktverdampfendem Kühlmittel, zum Beispiel NH₃, Frigen R22 oder dergleichen, permanent gekühlt. Die Kühlvorrichtung ist in Fig. 1 schematisch angedeutet und mit dem Bezugszeichen 30 bezeichnet.

Die beiden Schnecken 28 und 29 des Doppelextruders 27 sind derart konfiguriert, daß eine definierte Verdichtung im Schneckenspalt erfolgt. Diese wird durch eine gesteuerte Gegendruckblende 31, welche vor einer Ausformdüse 32 am Extruder angeordnet ist durch einen definiert konisch verlaufenden Kern der Extruderschnecken 40 in der Materialeinzugszone, und durch eine abgestimmte Schneckendrehzahl eingestellt (Erhöhung des Gegendruckes).

Die Extruderschnecken 28 und 29 kämmen nicht dicht miteinander, sondern sind überlappend mit achsialem Versatz der beiden geometrisch gleichen Schnecken 28 und 29 ausgeführt, wobei der achsiale Versatz zum Beispiel W/2 (W = Schneckenkanalbreite) beträgt. Auf diese Weise wird das zu verdichtende feindisperse Pulver weitestgehend homogen unterhalb kritischer Strukturzerstörungsspannungen beanspruch- bzw. verdichtbar, bei gleichzeitig definiert schonender überlagerter Vermischung im Schneckenkanal, was für eine gleichmäßige Kühlung von Bedeutung ist. Auf diese Weise kann eine definiert lockere schaumartige Produktstruktur realisiert werden.

Die Extrudervorrichtung 27 wirkt als Kompaktor. Die Betriebsweise des Kompaktors (Drehzahl, Stellung der Gegendruckblende 31, Kühlmanteltemperatur) wird über den von der Gegendruckblende 31 gemessenen Kompaktierdruck über eine Druckmeßvorrichtung 33 gemessen. Es ist auch möglich, die Leistungsaufnahme des Schneckenantriebes 34 mechanisch, elektrisch oder elektronisch zu messen und derart zu steuern, daß ein definierter Kompaktierungsgrad bei vorgegebenem Eintrittsgutstrom einstellbar ist. Dies kann über Sprühparameter wie Sprühdüsendifferenzdruck, Fluidviskosität, Gefriertemperatur produktspezifisch geschehen.

Nach dem Austritt des kompaktierten Materialsstranges 35 aus der Formdüse 36 erfolgt zum Beispiel mittels Schneidevorrichtung 37 auf ein motorisch angetriebenes Abnahmeband 38, zum Beispiel einem Stetigförderer, die Portionierung des Produktes auf vorgegebene Teile 39.

Mit D ist der Außendurchmesser jedes Schneckenextruders 28 bzw. 29 und mit H der Eingriffsbereich der Schneckenwendel bezeichnet (≈̂ Schneckenkanalhöhe).

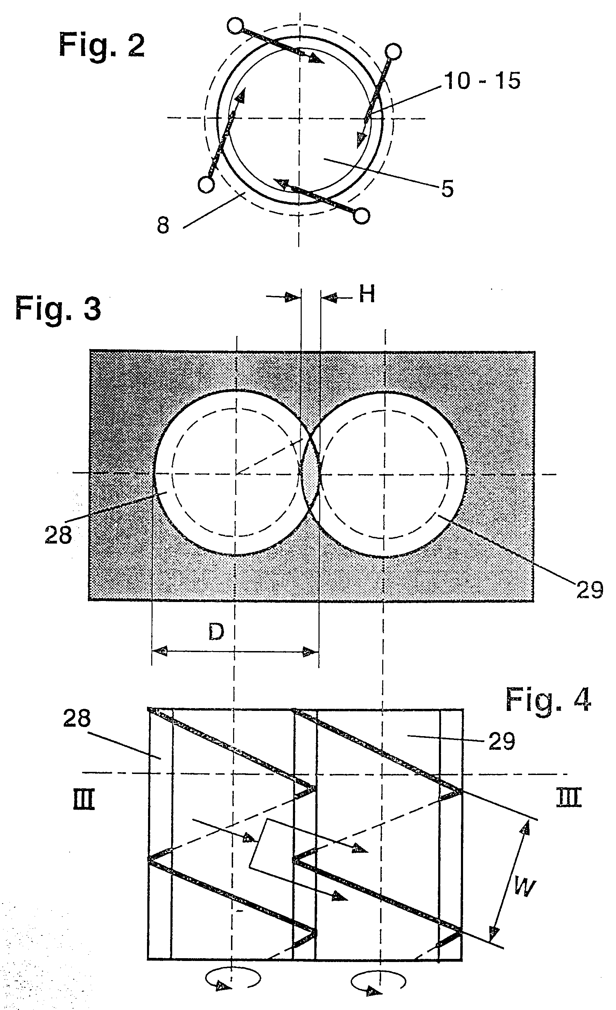

Wie man aus Fig. 4 erkennt, sind die Schnecken 28 und 29 motorisch in gleicher Drehrichtung angetrieben, können im Bedarfsfalle aber auch mit unterschiedlichen Drehrichtungen angetrieben werden.

Die Wendel der Extruderschnecken 28, 29 weisen den gleichen Steigungswinkel auf.

In Abänderung der aus Fig. 1 ersichtlichen Ausführungsform können mehrere Sprühdüsen, gegebenenfalls auch eine Vielzahl der Sprühdüsen 4 über den Querschnitt des Gefriersprühturmes 5 in gleichen oder in unterschiedlichen Ebenen angeordnet sein. Den Gefriersprühdüsen 4 kann in diesem Fall ein einheitliches Medium, das gegebenenfalls aus einer oder mehreren Komponenten besteht, oder aber unterschiedliche fluide Komponenten zugeführt werden, so daß sich das herabrieselnde gefrierende, feindisperse Pulver bereits vorab mischt, bevor es durch die Zellenradschleuse 6, ein Rüttelsieb, ein Schwingsieb, einen Schneckenförderer oder dergleichen der Kompaktierungseinheit oder dergleichen zugeführt wird.

Statt Pulver einer Kompaktierung zuzuführen, kann es auch in geeigneter Weise tiefgefroren zwischengelagert werden. Im tiefgefrorenen Zustand ist das Pulver schütt-, riesel- und beförderungsfähig. Es kann in diesem Zustand auch in Fässern, Dosen, Behältern, Kästen oder Kartons verpackt werden.

Bevorzugt wird das erfindungsgemäße Verfahren für die Herstellung von Speiseeis angewendet, es kann aber überall dort Anwendung finden, wo nach konventionellen Verfahrensweisen ein homogenes Vermischen von Komponenten schwer oder fast unmöglich ist. Bei der Erfindung läßt sich das rieselfähige, gefrorene Pulver der unterschiedlichsten Komponenten in dem jeweils gewünschten Maße mischen oder aber auch willkürlich einzelne Komponenten an bestimmten Stellen einlagern, was zum Beispiel für Pulver aus gefrorenen Fruchtmassen zutrifft, die zum Beispiel nur an bestimmten Stellen im Speiseeis oder dergleichen vorkommen sollen.

Wie man erkennt, entfallen alle Prozesse und Prozeßanlagen, die das Reifen und Homogenisieren sowie Aufschlagen und Gefrieren in Freezern bzw. Tiefgefriertunneln für die Komponenten herkömmlich erforderlich machen.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Leitung
- 2: Pumpe
- 3: Sprühkopf
- 4: Sprühdüse
- 5: Gefriersprühturm, Raum, gekühlter
- 6: Zellenradabschluß, Zellenradschleuse
- 7: Auslaßöffnung
- 8: Isolationsmantel
- 9: Bodenstück, Auffangvorrichtung
- 10: Düse
- 11: Düse
- 12: Düse
- 13: Düse
- 14: Düse
- 15: Düse
- 16: Leitung
- 17: Leitung
- 18: Sammelleitung
- 19: Verteilerleitung
- 20: Anschlußstutzen
- 21: Anschlußstutzen
- 22: Anschlußstutzen
- 23: Umluftvorrichtung
- 24: Doppelmantelspalt
- 25: Leitung
- 26: Druckluftleitung
- 27: Extrudervorrichtung, Kompaktierungsvorrichtung
- 28: Extruder, Schneckenextruder
- 29: Extruder, Schneckenextruder
- 30: Kühlvorrichtung
- 31: Gegendruckblende
- 32: Ausformdüse
- 33: Druckmeßvorrichtung
- 34: Schneckenantrieb
- 35: Materialstrang
- 36: Formdüse
- 37: Schneidevorrichtung
- 38: Abnahmeband, Förderer
- 39: Teil
- 40: Schneckenkern, konischer (Extruder - Kompaktierer)
- D: Durchmesser eines Schneckenextruders
- H: Eingriffsbereich der Schneckenwendel ( ≈̂ Schneckenkanalhöhe)
- W: Schneckenkanalbreite

## Patentansprüche

1. Einrichtung zum Herstellen von Speiseeis, gefrorenen Dessert- und Fruchtmassen, Tortenmassen, Teigmassen, aus mehreren schwer mischbaren fluiden Matrizes, welche aus wenigstens einer Stoffkomponente bestehen, mit
a) einem als Gefriersprühturm (5) ausgebildeten gekühlten Raum;
b) mehreren Sprühdüsen (4) zum Einbringen mehrerer fluider Komponenten, die die Matrix bilden, in den Gefriersprühturm (5) als tropfenförmig feinverteilter Nebel;
c) einer Kühlvorrichtung zum Kühlen des Innenraums des Gefriersprühturms (5);
d) einer Auffangvorrichtung (9) am Boden des Gefriersprühturmes (5) zum Auffangen der während des Fallens durch den Gefriersprühturm (5) gefrorenen Tropfen zu tiefgefrorenem, rieselfähigem Pulver oder Schnee;
e) einer Fördervorrichtung zum gekühlten Wegfördern des gefrorenen rieselfähigen Pulvers oder Schnees zur Weiterverarbeitung desselben;
f) einer Kompaktiervorrichtung (27), durch die das tiefgefrorene rieselfähige Pulver oder der Schnee definiert lagerfähig verdichtbar ist, wobei die Betriebsweise der Kompaktierungsvorrichtung (27), nämlich die Drehzahl eines Doppelextruders, in Abhängigkeit von einer Druckmeßvorrichtung (33) gemessenen Gegendruck zwischen einer Gegendruckblende (31) und Extruderauslaßvorrichtung oder über die Leistungsaufnahme des Schneckenantriebsmotors (34) derart gesteuert ist, daß ein definierter Kompaktierungsgrad bei vorgegebenem Eintrittsgut produktmassenstromspezifisch einstellbar ist.

2. Einrichtung nach Anspruch 1, **dadurch gekennzeichnet**, daß die Druckmeßvorrichtung (33) zwischen der Gegendruckblende (31) und dem Ausgangsmundstück der Extrudervorrichtung eingeschaltet ist.

3. Einrichtung nach Anspruch 1 oder 2, **dadurch gekennzeichnet**, daß die beim Kompaktierungsextruder eingesetzten Schnecken nicht kämmend mit einem axialen Versatz, welcher der halben Schneckenkanalbreite entspricht, angeordnet sind, und in der Materialeinzugszone einen sich in Förderrichtung konisch erweiternden Schneckenkern (40) besitzen.

## Claims

1. Apparatus for the preparation of ice cream, frozen dessert and fruit masses, cake masses, dough masses, from several hard-to-mix fluid matrices consisting of at least one component, comprising
a) a refrigerated chamber designed as a freezer spray tower (5);
b) several spray nozzles (4) for introducing several fluid components forming the matrix into the freezer spray tunnel (5) as a drop-shaped, finely divided mist;
c) a refrigerating unit for cooling the interior of the freezer spray tower (5);
d) a collecting vessel (9) at the bottom of the freezer spray tower (5) for collecting the drops which, while falling through the freezer spray tower (5), have turned into deep-frozen, free-flowing powder or snow;
e) a conveying system for refrigerated conveyance of the frozen, free-flowing powder or snow for processing;
f) a compacting device (27) ensuring compactibility of the deep-frozen, free-flowing powder or snow so as to be perfectly suitable for storage, the mode of operation of the compacting device (27), viz. the speed of the double extruder being controlled as a function of the back pressure measured by a pressure gauge (33) between a back pressure orifice plate (31) and extruder outlet device or via the power input of the screw driving motor (34) in such a manner that a defined degree of compaction is product-mass specifically adjustable with specified intake material.

2. Apparatus as claimed in Claim 1, characterized in that the pressure gauge (33) is interposed between the back pressure orifice plate (31) and the orifice relief of the extruder.

3. Apparatus as claimed in Claim 1 or Claim 2, characterized in that the worms used in the compacting extruder are not arranged to mesh with an axial displacement corresponding to half the worm channel width, and are provided with a worm root (40) flaring out in the direction of conveyance in the material intake zone.

## Revendications

1. Appareil servant à préparer les crèmes glacées, pâtes à dessert et à fruits congelées, pâtes à tartes, pâtes patissières, boulangères et itallennes, à partir de matrices fluides difficilement miscibles et se composant d'au moins un ingrédient, et comprenant
a) un compartiment réfrigéré configuré en tour de pulvérisation-congélation (5);
b) plusieurs buses pulvérisatrices (4) servent à injecter dans la tour de pulvérisation-congélation (5), sous forme d'un brouillard de gouttelettes finement réparties, plusieurs ingrédients fluides constitutifs de la matrice;
c) un dispositif réfrigérant servant à refroidir le compartiment intérieur de la tour de pulvérisation-congélation (5);
d) un dispositif (9) situé au bas de la tour de pulvérisation-congélation (5) et servant à récupérer les gouttelettes qui gèlent pendant leur chute dans la tour (5) et forment ainsi une poudre ou neige surgelée coulante;
e) un dispositif refouleur servant à évacuer sous atmosphère réfrigérée la poudre ou neige gelée coulante en vue de poursuivre sa transformation;
f) un dispositif de compactage (27) au moyen duquel la poudre ou neige surgelée coulante est compactable pour lui conférer une stockabilité définie, le mode opératoire du dispositif de compactage (27), à savoir la vitesse d'un double extrudeur, étant piloté en fonction de la pression antagoniste mesurée par un dispositif manométrique (33) et régnant entre un diaphragme (31) et un dispositif de sortie de l'extrudeur, ou piloté en mesurant la puissance absorbée par le moteur (34) entraînant la vis sans fin, de sorte à pouvoir ajuster le degré de compactage voulu, tenant compte du produit entrant et du débit spécifique de ce dernier.

2. Dispositif selon la revendication 1, **caractérisé en ce que** le dispositif manométrique (33) est intercalé entre le diaphragme de pression antagoniste (31) et l'embout de sortie du dispositif extrudeur.

3. Dispositif selon la revendication 1 ou 2, **caractérisé en ce que** les vis sans fin en oeuvre sur cet extrudeur à compactage sont disposées sans effet peignant et avec un décalage axial correspondant à la moitié de la largeur du canal de la vis sans fin, et que ces vis, dans la zone d'engagement de la matière, possèdent un coeur (40) qui va s'élargissant comme un cône dans le sens du refoulement.
